(19) Europäisches Patentamt
European Patent Office
Office européen des brevets

(11) Veröffentlichungsnummer : **0 467 845 A2**

## (12) EUROPÄISCHE PATENTANMELDUNG

(21) Anmeldenummer : 91810552.9

(22) Anmeldetag : 11.07.91

(51) Int. Cl.⁵ : **B26F 3/00**

(30) Priorität : 17.07.90 DE 4022484

(43) Veröffentlichungstag der Anmeldung :
22.01.92 Patentblatt 92/04

(84) Benannte Vertragsstaaten :
**AT BE CH DE ES FR GB IT LI NL SE**

(71) Anmelder : **Gurit-Essex AG**
**CH-8807 Freienbach (CH)**

(72) Erfinder : **Riederer, Rudolf**
**Stommelnerweg 33**
**W-5024 Pullheim (DE)**

(74) Vertreter : **Rottmann, Maximilian R.**
**c/o Rottmann, Zimmermann + Partner AG**
**Glattalstrasse 37**
**CH-8052 Zürich (CH)**

(54) Verfahren zum Schneiden einer klebrigen, plastischen Masse, insbesondere eines Klebstoff-Strangs, und Verfahren zum maschinellen Aufbringen eines Klebstoff-Profilstrangs entlang dem Rand einer Glasscheibe.

(57)     Beim erfindungsgemässen Verfahren zum Schneiden einer klebrigen, plastischen Masse, insbesondere eines Klebstoff-Strangs, erfolgt das Schneiden berührungslos mittels eines strahlförmigen Schneidemediums, zweckmässigerweise mittels eines Fluidstrahls, inbesondere mittels eines gebündelten, dünnen Fluidstrahls unter hohem Druck, und vorzugsweise mittels eines Luftstrahls von etwa 0,15 mm Durchmesser und einem Druck von etwa 8 bis 10 MPa (80 bis 100 bar). Das Schneiden kann aber auch mittels eines Laserstrahls erfolgen.

Vorzugsweise findet das erfindungsgemässe Verfahren Anwendung zum maschinellen Aufbringen eines Klebstoff-Profilstrangs entlang dem Rand einer Glasscheibe, insbesondere einer Fahrzeugscheibe, wobei Klebstoff durch eine mittels eines Roboters entlang dem Rand der Fahrzeugscheibe geführten Extrudier-Profildüse extrudiert und auf die Glasoberfläche angedrückt wird. Im einzelnen wird wie folgt vorgegangen :
— Der im Bereich des Startpunktes der Extrudier-Profildüse liegende deformierte Anfangsteil des Profilstrangs wird mittels eines quer zum Profil geführten Schnittes maschinell vom nichtdeformierten Teil des Profilstrangs abgetrennt ;
— Der abgetrennte deformierte Anfangsteil wird maschinell von der Glasoberfläche entfernt ;
— Im Bereich des Endpunktes der Profildüse wird diese von der Glasoberfläche abgehoben ;
— Der Profilstrang wird mittels eines zweiten, parallel zum ersten geführten Schnittes maschinell auf eine solche Länge abgeschnitten, dass die beiden Enden des Profilstrangs deckungsgleich aneinanderstossen ;
— Der Endbereich des Profilstrangs wird maschinell an die Glasoberfläche angedrückt und die beiden Enden des Profilstrangs werden maschinell aneinander gedrückt.

Das Verfahren ermöglicht ein rein maschinelles Aufbringen des Klebstoff-Profilstrangs, welches völlig automatisch abläuft und keinen manuellen Eingriff notwendig macht.

EP 0 467 845 A2

Die Erfindung betrifft:

– das in den Ansprüchen 1 bis 5 umschriebenen Verfahren zum Schneiden einer klebrigen, plastischen Masse, insbesondere eines Klebstoff-Strangs; sowie

– das in den Ansprüchen 6 bis 11 umschriebene Verfahren zum maschinellen Aufbringen eines Klebstoff-Profilstrangs entlang dem Rand einer Glasscheibe, insbesondere einer Fahrzeugscheibe.

Es ist bekannt, Klebstoff-Profilstränge entlang dem Rand einer Fahrzeugscheibe maschinell aufzubringen, indem man den Klebstoff durch eine Extrudier-Profildüse, welche mittels eines Roboters entlang dem Rand der Fahrzeugscheibe geführt wird, extrudiert. Dabei war das Profil im Bereich des Start- und des Endpunktes der Extrudier-Profildüse stets deformiert, da die Klebstoff-Profilstränge infolge ihrer Klebrigkeit nicht exakt geschnitten werden konnten. Dies war nicht nur unschön, sondern brachte auch die Gefahr mit sich, dass die spätere Verklebung in diesen Bereichen undicht wurde.

Man war daher bisher gezwungen, das Schneiden des Klebstoff-Profilstrangs manuell vorzunehmen und die fraglichen Bereiche des Profilstrangs manuell zu entfernen und dort ein undeformiertes Profilstrangstück manuell einzusetzen. Dies war nicht nur zeitraubend und teuer, sondern stellte für eine automatisierte Fertigung den eigentlichen Engpass dar.

Aufgabe der Erfindung ist es daher, ein Verfahren zum Schneiden einer klebrigen Masse, insbesondere eines Klebstoff-Strangs, sowie ein Verfahrens zum maschinellen Aufbringen eines Klebstoff-Profilstrangs entlang dem Rand einer Glasscheibe, insbesondere einer Fahrzeugscheibe, zu schaffen, welches völlig automatisch abläuft und keinen manuellen Eingriff notwendig macht.

Das erfindungsgemässe Verfahren zum Schneiden einer klebrigen, plastischen Masse, insbesondere eines Klebstoff-Strangs, ist dadurch gekennzeichnet, dass das Schneiden berührungslos mittels eines strahlförmigen Schneidemediums erfolgt. Zweckmässigerweise erfolgt das Schneiden mittels eines Fluidstrahls, insbesondere mittels eines gebündelten, dünnen Fluidstrahls unter hohem Druck, und vorzugsweise mittels eines Luftstrahls von etwa 0,15 mm Durchmesser und einem Druck von etwa 8 bis 10 MPa (80 bis 100 bar). Ebensogut kann das Schneiden aber auch mittels mittels eines Laserstrahls erfolgen.

Vorzugsweise findet das erfindungsgemässe Verfahren Anwendung zum maschinellen Aufbringen eines Klebstoff-Profilstrangs entlang dem Rand einer Glasscheibe, insbesondere einer Fahrzeugscheibe, wobei Klebstoff durch eine mittels eines Roboters entlang dem Rand der Fahrzeugscheibe geführten Extrudier-Profildüse extrudiert und auf die Glasoberfläche angedrückt wird; diese Anwendung ist dadurch gekennzeichnet,

– dass der im Bereich des Startpunktes der Extrudier-Profildüse liegende deformierte Anfangsteil des Profilstrangs mittels eines quer zum Profil geführten Schnittes maschinell vom nichtdeformierten Teil des Profilstrangs abgetrennt wird;

– dass der abgetrennte deformierte Anfangsteil maschinell von der Glasoberfläche entfernt wird;

– dass im Bereich des Endpunktes der Profildüse diese von der Glasoberfläche abgehoben wird;

– dass der Profilstrang mittels eines zweiten, parallel zum ersten geführten Schnittes maschinell auf eine solche Länge abgeschnitten wird, dass die beiden Enden des Profilstrangs deckungsgleich aneinanderstossen; und

– dass der Endbereich des Profilstrangs maschinell an die Glasoberfläche angedrückt und die beiden Enden des Profilstrangs maschinell aneinander gedrückt werden.

Da der aufgebrachte Klebstoff-Profilstrang klebrig ist, werden nicht nur die Schnitte berührungslos, d.h. ohne mechanische Berührung, durchgeführt, z.B. mittels eines Druckfluids, wie Druckluft oder einer Druckflüssigkeit, oder mittels eines Laserstrahls. Auch das Andrücken des Endbereiches des Profilstrangs an die Glasoberfläche und der beiden Enden des Profilstrangs aneinander erfolgt zweckmässigerweise ohne mechanische Berührung, z.B. ebenfalls mittels eines Druckfluids, wie Druckluft oder einer Druckflüssigkeit.

Vorzugsweise werden die beiden Schnitte schiefwinklig zur Glasoberfläche geführt, derart, dass das Ende des Profilstrangs über dessen Anfang zu liegen kommt.

Eine beispielsweise Ausführungsform der Anwendung der erfindungsgemässen Verfahren wird nun anhand der Zeichnung näher erläutert. Es zeigen:

Fig. 1 die Ansicht des Anfangsbereiches des extrudierten Profilstranges mit dem deformierten Anfangsteil des Profilstrangs;

Fig. 2 die Ansicht desselben Bereiches nach dem Abtrennen und Entfernen des deformierten Anfangsteils;

Fig. 3 die Endphase des Extrudierens im Längsschnitt; und

Fig. 4 einen Schnitt nach IV-IV in Fig. 3 im grösseren Massstab.

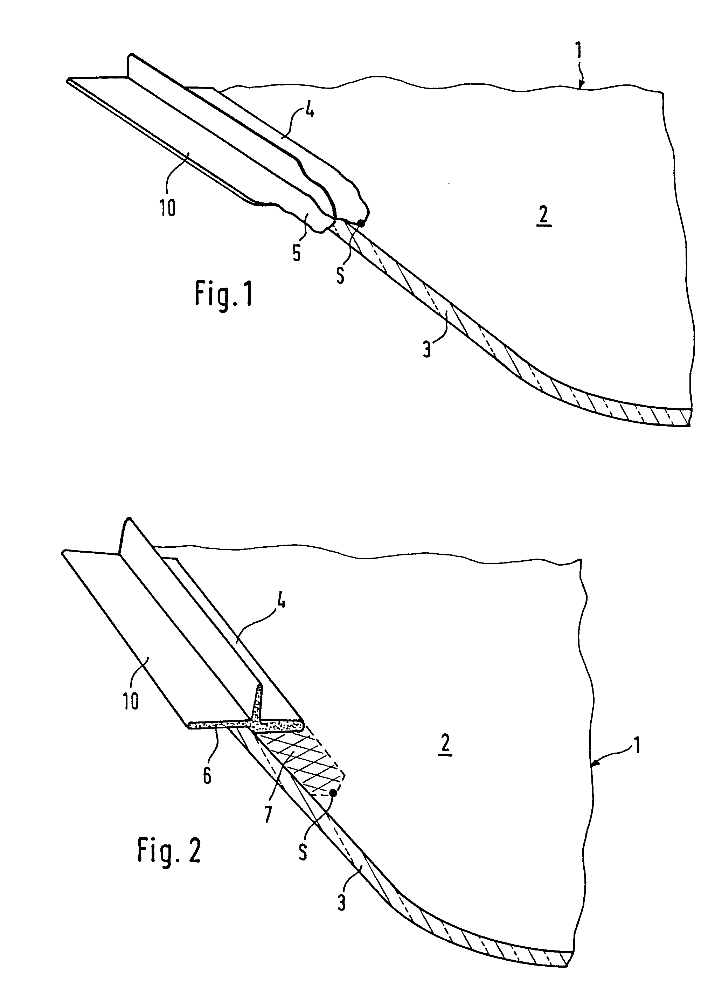

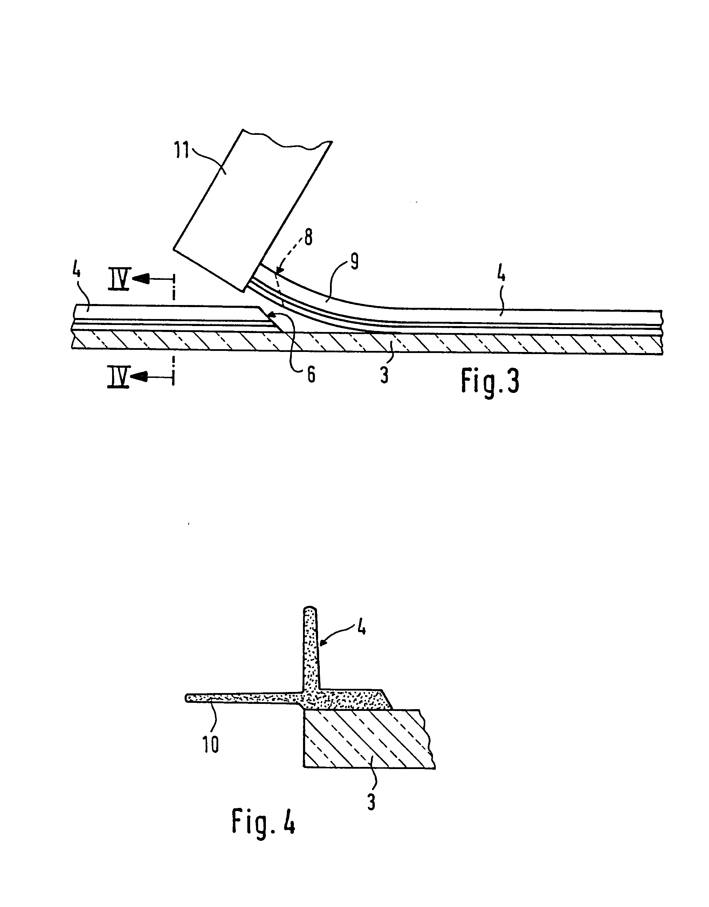

In allen Figuren ist die Glasscheibe mit 1, die Glasoberfläche mit 2, der Glasrand mit 3 und der Klebstoff-Profilstrang mit 4 bezeichnet. Der Profilstrang 4 weist zweckmässig den aus den Fig. 2 und 4 ersichtlichen Querschnitt mit einer über den Glasrand 3 freistehenden Lippe 10 auf.

Die Durchführung des Verfahrens erfolgt wie folgt: Zunächst wird die Extrudier-Profildüse 11 durch den Roboter zum Startpunkt S auf der Glasoberfläche 2 bewegt. Nach dem Aufsetzen der Extrudier-Profildüse 11 auf den vorgesehenen Startpunkt S wird über eine Dosiervorrichtung der Klebstoff, zum Beispiel ein Polyurethan-Klebstoff, kontrolliert aus der Extrudier-Profildüse 11 extrudiert, während diese dem Glasrand 3 entlang geführt wird.

Dabei entsteht im Bereich des Startpunkts S der Extrusion ein deformierter Anfangsteil 5 des Profilstrangs 4 von etwa 25 mm Länge.

Dieser wird nun mittels einer (nicht dargestellten) Schneidevorrichtung, welche berührungsfrei arbeitet, quer zum Profilstrang 4 und vorzugsweise schiefwinklig zur Glasoberfläche 2 bis auf letztere hinunter durchgeschnitten. Danach beginnt der Profilstrang 4 nicht mehr deformiert, sondern mit einem exakten Profilquerschnitt 6 (Fig. 2).

Als Schneidevorrichtung setzt man vorzugsweise einen gebündelten Strahl von etwa 0,15 mm Durchmesser eines Druckfluids, insbesondere Druckluft, von 8 bis 10 MPa (80 bis 100 bar) als Trennmedium ein. Bei Verwendung eines Druckfluids kann die Schneidevorrichtung nach dem Schneiden an den Startpunkt S zurückgesetzt und der abgeschnittene Anfangsteil 5 des Profilstrangs 4 von dort aus von der Glasoberfläche 2 "weggeblasen" werden. Auf der Glasoberfläche 2 bleiben dann allenfalls noch geringe Spuren 7 des entfernten Anfangsteils 5 zurück (Fig. 2), welche jedoch das spätere Anpressen des Endteils 9 des Profilstrangs 4 auf die Glasoberfläche 2 (Fig. 3) nicht beinträchtigen.

Während dieser Operation wird das Extrudieren des Profilstrangs 4 entlang dem Glasrand 3 fortgesetzt. Kurz vor dem erneuten Erreichen des Startpunktes S, d.h. im Bereich des Endpunktes, wird die Extrudier-Profildüse 11 und damit der letzte Teil 9 des extrudierten Profilstrangs 4 von der Glasoberfläche 2 abgehoben.

Mittels der Schneidevorrrichtung wird nun der Profilstrang 4 mittels eines parallel zum ersten Schnitt 6 geführten zweiten Schnittes 8 deckungsgleich durchgeschnitten. Der angehobene Profilteil 9 fällt nun unter dem Einfluss der Schwerkraft auf die Glasoberfläche 2 zurück.

Dabei sollen die beiden Enden 6 und 8 des Profilstrangs 4 möglichst nahe aneinanderstossen. Werden die beiden Schnitte schiefwinklig zur Glasoberfläche 2 geführt, kann erreicht werden, dass das Ende 8 des Profilstrangs 4 über dessen Anfang 6 zu liegen kommt. Auf diese Weise wird eine Überlappung der beiden Enden und damit ein unterbrechungsfreies Kleben des Klebstoffs erreicht.

Nun werden von oben das auf der Glasoberfläche 2 lose aufliegende Stück 9 des Profilstrangs 4 auf die Glasoberfläche 2 und die beiden Enden 6 und 8 aneinander gedrückt. Dies erfolgt zweckmässigerweise berührungsfrei, z.B. mittels eines weichen Luftstrahls. Die Enden der über den Glasrand 3 freistehenden Lippe 10 werden von oben und unten aneinandergedrückt, zweckmässigerweise ebenfalls berührungsfrei, z.B. ebenfalls mittels eines Luftstrahls.

**Patentansprüche**

1.    1. Verfahren zum Schneiden einer klebrigen, plastischen Masse, insbesondere eines Klebstoff-Strangs, dadurch gekennzeichnet, dass das Schneiden berührungslos mittels eines strahlförmigen Schneidmediums erfolgt.

2.    Verfahren nach Anspruch 1, dadurch gekennzeichnet, dass das Schneiden mittels eines Fluidstrahls erfolgt.

3.    Verfahren nach Anspruch 2, dadurch gekennzeichnet, dass das Schneiden mittels eines gebündelten, dünnen Fluidstrahls unter hohem Druck erfolgt.

4.    Verfahren nach Anspruch 3, dadurch gekennzeichnet, dass das Schneiden mittels eines Luftstrahls von etwa 0,15 mm Durchmesser und einem Druck von etwa 8 bis 10 MPa (80 bis 100 bar) erfolgt.

5.    Verfahren nach Anspruch 1, dadurch gekennzeichnet, dass das Schneiden mittels eines Laserstrahls erfolgt.

6.    Verfahren zum maschinellen Aufbringen eines KlebstoffProfilstrangs entlang dem Rand einer Glasscheibe, insbesondere einer Fahrzeugscheibe, bei welchem der Klebstoff durch eine mittels eines Roboters entlang dem Rand der Glasscheibe geführten Extrudier-Profildüse extrudiert und auf die Glasoberfläche angedrückt wird, dadurch gekennzeichnet,
   – dass der im Bereich des Startpunktes der Extrudier-Profildüse liegende deformierte Anfangsteil des Profilstrangs mittels eines quer zum Profil geführten Schnittes maschinell vom nichtdeformierten Teil des Profilstrangs abgetrennt wird;

– dass der abgetrennte deformierte Anfangsteil maschinell von der Glasoberfläche gelöst und entfernt wird;

– dass im Bereich des Endpunktes der Profildüse diese von der Glasoberfläche abgehoben wird;

– dass der Profilstrang mittels eines zweiten, parallel zum ersten geführten Schnittes maschinell auf eine solche Länge abgeschnitten wird, dass die beiden Enden des Profilstrangs deckungsgleich aneinanderstossen; und

– dass der Endbereich des Profilstrangs maschinell an die Glasoberfläche angedrückt und die beiden Enden des Profilstrangs maschinell aneinander gedrückt werden.

7. Verfahren nach Anspruch 6, dadurch gekennzeichnet, dass die Schnitte mittels eines Druckfluids durchgeführt werden.

8. Verfahren nach Anspruch 6 oder 7, dadurch gekennzeichnet, dass die Ablösung und Entfernung des abgetrennten Anfangsteils mittels eines Druckfluids erfolgt.

9. Verfahren nach einem oder mehreren der Ansprüche 6 bis 8, dadurch gekennzeichnet, dass das Andrücken des Endbereiches des Profilstrangs an die Glasoberfläche und der beiden Enden des Profilstrangs aneinander mittels eines Druckfluids erfolgt.

10. Verfahren nach den Ansprüchen 7 bis 9, dadurch gekennzeichnet, dass als Druckfluid für alle Operationen Druckluft eingesetzt wird.

11. Verfahren nach Anspruch 6, dadurch gekennzeichnet, dass die Schnitte schiefwinklig zur Glasoberfläche geführt werden, derart, dass das Ende des Profilstrangs über dessen Anfang zu liegen kommt.

Fig.1

Fig. 2

Fig.3

Fig. 4